# EUROPÄISCHE PATENTSCHRIFT

(11) **EP 0 582 187 B1**
(45) Veröffentlichungstag und Bekanntmachung des Hinweises auf die Patenterteilung: **25.10.1995**
(21) Anmeldenummer: 93112026.5
(22) Anmeldetag: 28.07.1993
(51) Int. Cl.: C09D 4/00, C08F 299/04, C09D 4/06

(54) **Überzugsmittel und dessen Verwendung bei der Herstellung von Überzügen mit rasch bearbeitbarer Oberfläche**
Coating and its use for the preparation of coatings with a rapidly processable surface
Revêtement et son utilisation pour la fabrication de revêtements ayant une surface rapidement traitable

(30) Priorität: 30.07.1992 DE 4225105
(43) Veröffentlichungstag der Anmeldung: 09.02.1994
(73) Patentinhaber: Herberts Gesellschaft mit beschränkter Haftung, 42285 Wuppertal (DE)
(72) Erfinder: Drüeke, Stefan, Dr., D-42281 Wuppertal (DE); Flosbach, Carmen, Dr., D-42115 Wuppertal (DE); Schubert, Walter, Dr., D-42349 Wuppertal (DE)
(74) Vertreter: Türk, Gille, Hrabal, Leifert

(56) Entgegenhaltungen:
- EP-A- 0 224 158
- EP-A- 0 227 454
- EP-A- 0 231 442
- US-A- 2 759 913

## Beschreibung

Die Erfindung betrifft Überzugsmittelzusammensetzungen, die zu Überzügen mit rasch bearbeitbarer Oberfläche führen. Sie sind insbesondere als Zusammensetzungen für Füller und Spachtelmassen geeignet.

Überzugsmittel auf der Basis CH-azider Verbindungen und olefinisch ungesättigter Verbindungen sind bekannt. Beispielsweise werden in der EP-A-0 224 158 Zweikomponenten-Lacke beschrieben, die derartige Komponenten enthalten. Diese Zweikomponenten-Lacke sind in der Wärme härtbar; die Härtungsreaktion wird durch Lewis- und/oder Brönstedt-Basen katalysiert. In der EP-A-0 227 454 werden Acetoacetatpolymere als Vernetzer für Acryloyl-ungesättigte Acrylate beschrieben. Derartige Systeme sind für die Herstellung von verschiedenen Überzügen geeignet.

Bei der Herstellung von Überzügen, insbesondere auf dem Kraftfahrzeugsektor in Mehrschichtaufbau, ist häufig notwendig, Schichten auszubilden, deren Oberfläche rasch härtbar ist, um eine Zwischenbearbeitung, wie ein Schleifen, zu ermöglichen. Derartige Schichten werden insbesondere aus Spachtelmassen oder Füllermassen erstellt. In der Literatur ist es bekannt, zur Herstellung solcher Schichten ein sogenanntes Double-Cure-System einzusetzen, das durch UV-Strahlung angehärtet und anschließend konventionell durch Erhitzen durchgehärtet werden kann. Ein solches System wird in der EP-A-0 247 563 beschrieben; es handelt sich dabei um ein Zweikomoonenten-System aus einem strahlenhärtbaren Oligomer mit mindestens zwei (Meth)Acrylatgruppen, einem OH-funktionellen Polymer, einem Polyisocyanat, Lichtschutzmitteln und Photoinitiatoren. Die Verwendung von toxikologisch nicht unbedenklichen Polyisocyanaten stellt jedoch einen erheblichen Nachteil dieser Überzugsmittel dar. In der EP-A-0 245 639 wird die Herstellung von stabilen, kratzfesten und Lösungsmittel-beständigen Beschichtungen beschrieben, die deckende Pigmente enthalten. Das System enthält neben einem ungesättigten Polyester Cellulosenitrat, Pigmente, Hydroperoxide, Sikkative und Photoinitiatoren, wobei die Verwendung von Peroxiden Risiken birgt. Die Systeme sollen bis zu tieferen Schichten durch Strahlung härtbar sein.

Aufgabe der Erfindung ist die Bereitstellung von Überzugsmitteln, die zu Überzügen mit rasch bearbeitbarer Oberfläche führen, die frei von toxisch bedenklichen Polyisocyanaten formuliert werden können und keine Peroxide benötigen. Es sollen mechanisch und chemisch stabile Oberflächen erzielt werden.

Es hat sich gezeigt, daß diese Aufgabe gelöst werden kann durch ein Überzugsmittel, welches enthält:
A) 10 - 80 Gew.-% einer oder mehrerer Verbindungen mit im Mittel mindestens zwei CH-aciden Wasserstoffatomen, als Vernetzer,
B) 10 - 80 Gew.-% einer oder mehrerer α,β-ungesättigter Verbindungen mit mindestens zwei gleichen oder unterschiedlichen Gruppen der allgemeinen Formel

   R₁R₂C=CR₃-CO-

   die über den Rest eines zwei- oder mehrwertigen Alkohols, eines Di- oder Polyamins oder Aminoalkohols miteinander verbunden sind, worin R₁, R₂ und R₃ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C) 0 - 50 Gew.-% einer oder mehrerer radikalisch oder ionisch polymerisierbarer Verbindungen,
D) 5 - 50 Gew.-% eines oder mehrerer Polyamine mit mindestens zwei Aminfunktionen, bezogen auf die Summe der Gewichte von A) , B) und C), die primär und/oder sekundär und die ganz oder teilweise verkappt sein können, im Molekül,
E) 0,01 - 5 Gew.-%, bezogen auf die Summe der Gewichte der Komponenten A), B), C) und D),; eines Katalysators in Form einer oder mehrerer Lewis- oder Brönstedt-Base, wobei die konjugierten Säuren der letzteren einen pKA-Wert von mindestens 10 haben,
F) 0,1 bis 10 Gew.-% bezogen auf die Summe der Gewichte der Komponenten A), B), C) und D) eines oder mehrerer Photoinitiatoren, sowie
gegebenenfalls Pigmente und/oder Füllstoffe, sowie gegebenenfalls lackübliche Hilfs- und Zusatzstoffe und gegebenenfalls ein oder mehrere organische Lösemittel und/oder Wasser.

Erfindungsgemäß handelt es sich bei den in den erfindungsgemäßen mäßen Überzugsmitteln als Komponente A) eingesetzten CH-aciden Vernetzern um solche, die mindestens zwei CH-acide Wasserstoffatome enthalten. Diese können beispielsweise aus einer oder mehreren der folgenden Gruppierungen stammen, die gleich oder verschieden sein können: 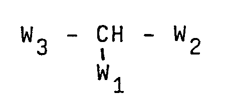
worin 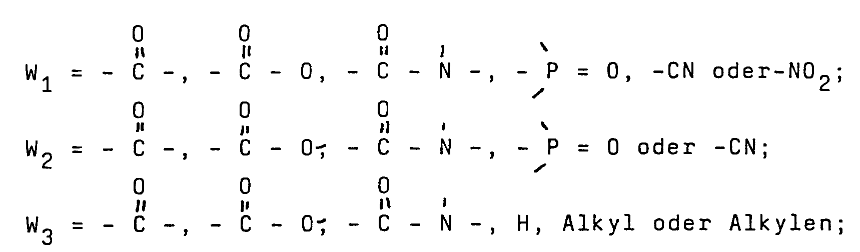
wobei die vorstehend für die Reste W₁, W₂ und W₃ definierten Carboxyl- oder Carbonamid-Gruppen jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist. Die CH-azide Funktionalität der Komponente A) beträgt im Mittel ≧ 2 pro Molekül. Wenn daher W₃ in der vorstehenden allgemeinen Formel die Bedeutung eines Wasserstoffatomes hat, so genügt eine derartige Gruppe, da diese zwei azide Wasserstoffatome aufweist.

Wie vorstehend erwähnt, beträgt die CH-acide Funktionalität der Komponente A) im Mittel ≧ 2. Dies bedeutet, daß im Gemisch mit höherfunktionellen Molekülen auch monofunktionelle Moleküle verwendet werden können.

Bevorzugt sind die CH-aciden Vernetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für CH-acide Vernetzerkomponenten A aufgeführt, die unter die vorstehende allgemeine Formel fallen. Diese Beispiele werden im Folgenden in drei Gruppen A1, A2 und A3 unterteilt.

In der Gruppe A1 sind im Molekül im Mittel mindestens zwei Gruppen mit aktiven H-Atomen vom Typ 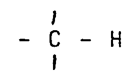
enthalten, die sich von Methantricarbonsäuremonoamideinheiten oder Acetessigsäureester-2-carbonsäureamiden ableiten.

Geeignete Verbindungen A1 sind beispielsweise Umsetzungsprodukte von Malonsäurediester wie Malonsäuredimethyl-, -diethyl-, -dibutyl-, -dipentylester oder Acetessigsäureester, wie Acetessigsäure-methyl-, -ethyl-, -butyl- oder -pentylester, mit Polyisocyanaten.

Beispiele für hierfür einsetzbare Polyisocyanate sind aliphatische, cycloaliphatische oder aromatische Polyisocyanate mit mindestens zwei Isocyanatgruppen, wie Tetramethylendiisocyanat, Hexamethylendiisocyanat, 2,2,4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat, IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-4''-triisocyanat, Tetramethylxylylen-diisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Umsetzung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der Vernetzerkomponente A1 eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und die Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 g/mol aufweisen.

Als Verbindung A1 eignen sich aber auch Umsetzungsprodukte von Estern und Teilestern mehrwertiger Alkohole der Malonsäure mit Monoisocyanaten. Mehrwertige Alkohole sind z.B. zwei- bis fünf-wertige Alkohole wie Ethandiol, die verschiedenen Propan-, Butan-, Pentan- und Hexandiole, Polyethylen- und Polypropylendiole, Glycerin, Trimethylolethan und - propan, Pentaerythrit, Hexantriol und Sorbit. Geeignete Monoisocyanate sind z.B. aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sind auch die entsprechenden Malonester von OH-Gruppen enthaltenden Acrylharzen, Polyestern, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente mit aktiven CH-Gruppen, die mindestens zwei Gruppen der Formel (I) 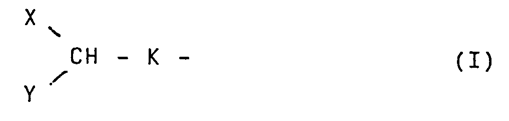
oder Struktureinheiten der Formel (I') oder (I'') 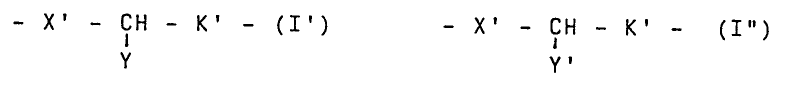
enthält, in der bedeuten: 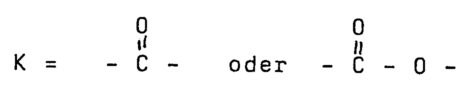
wobei letztere Gruppe über das C-Atom an die CH-Gruppe gebunden ist;
X und Y gleich oder verschieden sind und 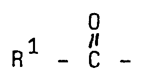
-CO₂R¹, -CN, -NO₂, -CONH₂, -CONR¹H oder -CONR¹R¹ sind, wobei die Reste R¹ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, mit der Maßgabe, daß nur einer der beiden Reste X, Y die NO₂-Gruppe darstellen kann; 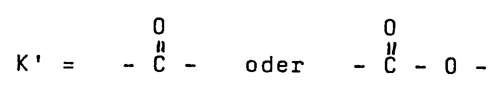
wobei letztere Gruppe über das C-Atom an die CH-Gruppe gebunden ist,
X' und Y' gleich oder verschieden sind und 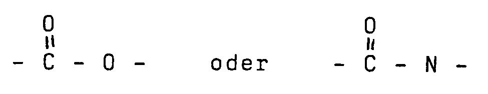
bedeuten,
mit der Maßgabe, daß wenn K' und X' gleichzeitig die Bedeutung von 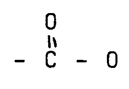
haben,
der Rest Y' vorzugsweise nicht die Bedeutung von 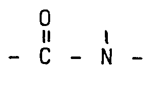
hat.

Die Zahl der Gruppen (I) in dem erfindungsgemäßen Härter beträgt vorzugsweise 2 bis 200 und insbesondere 2 bis 10, wobei sich die größeren Zahlenwerte auf oligomere oder polymere Produkte beziehen und in diesem Falle Mittelwerte darstellen, da Gemische vorliegen können.

Vorzugsweise besitzt die erfindungsgemäß verwendbare Härtungskomponente A2 die Formel (II) 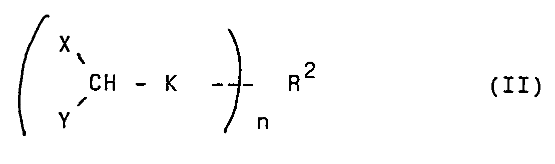
in der X, Y und K die obige Bedeutung haben, R² den Rest eines Polyols 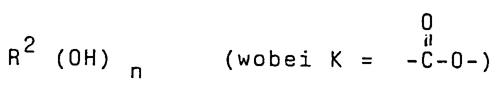
oder den Rest R² einer Polycarbonsäure 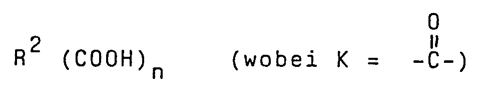
darstellt und n mindestens 2, vorzugsweise 2 bis 200, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch Umesterung von Verbindungen der Formel (III) oder der Formel (IV) 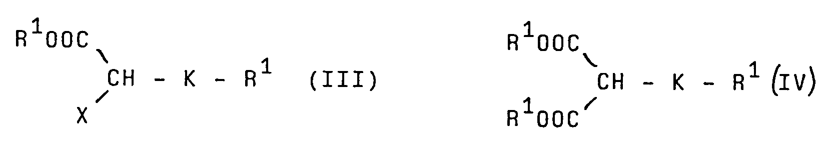
mit Polyolen R²(OH)ₙ erhält, wobei X, K und R¹ die obige Bedeutung haben.

Bei den vorstehend genannten Polyolen R²(OH)ₙ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und - (1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycyclohexyl)-propan, 2,2-Bis-(4-(β-hydroxyethoxy)phenyl)-propan, 2-Methyl-1,3,-propandiol, Glycerin, Trimethylolpropan, Hexantriol-(1,2,6)-Butantriol-(1,2,4), Tris-(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. ε-Caprolacton oder Hydroxycarbonsäuren, wie z.B. Hydroxypivalinsäure, ω-Hydroxydecansäure, ω-Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Alternativ kann das Polyol eine oligomere oder polymere Polyolverbindung (Polyolharz) darstellen, deren zahlenmittleres Molekulargewicht Mn (bestimmt mittels Gelchromatographie; Polystyrolstandard), üblicherweise im Bereich von etwa 170 bis etwa 10000, vorzugsweise etwa 500 bis etwa 5000 liegt. In Sonderfällen kann das zahlenmittlere Molekulargewicht jedoch 10000 und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-OS- 31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluylendiisocyanat als auch Isocyanurate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzung von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z.B. Styrol oder (Meth)Acrylsäureestern.

Die obigen Polycarbonsäuren R²(CO₂H)n, wobei n hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophtalsäure, Trimellithsäure, Pyromellithsäure, Tetrahydrophthalsäure, Hexahydrophthalsäure, Di- und Tetrachlorphthalsäure, Endomethylentetrahydrophtalsäure und ihr Hexachlorderivat, 1,4- und 1,3-Cyclohexandicarbonsäure, Glutarsäure, Maleinsäure, Fumarsäure, dimere und trimere Fettsäure, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure. Weiterhin die Umsetzungsprodukte der oben genannten Polyole R²(OH)ₙ mit cyclischen Carbonsäureanhydriden.

Bei der erfindungsgemäß verwendbaren Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.-%, insbesondere weniger als 1 Gew.-% an vernetzten Anteilen enthalten. Das CH-Äqulvalentgewicht, das ein Maß für die Menge an Gruppen (I) bzw. Struktureinheiten (I')/(II'') in (A2) ist, liegt im allgemeinen zwischen 100 und 5000, vorzugsweise 200 und 2000 und das Zahlenmittel des Molekulargewichts Mn in der Regel zwischen 200 und 10000, vorzugsweise zwischen 500 und 5000 (gelchromatographisch bestimmt; Polystyrolstandard). Verfahren zur Herstellung solcher Verbindungen sind in der EP-A-0 310 011 näher beschrieben.

Weitere Beispiele für die erfindungsgemäß verwendbare Härterkomponente sind solche vom Typ A3, bei dem sich die Gruppierung CH ableitet von einer Verbindung mit der Gruppierung -CO-CHR³-CO-, NC-CHR³-CO-, NC-CH₂-CN, =PO-CHR³-CO-, =PO-CHR³ -CN, =PO-CHR³-PO=, -CO-CHR³-NO₂, worin R³ C₁-C₈- Alkyl, H, vorzugsweise Wasserstoff ist. β-Dioxoverbindungen sind bevorzugt.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die CH-Funktion, mehrwertig. So können sie beispielsweise durch Veresterung eines Polepoxids mit einer die Gruppierung bildenden -CH-Carbonsäure, z.B. Cyanessigsäure, hergestellt worden sein. Man erhält so eine Komponente A3 mit zwei aktiven H-Atomen je Epoxidgruppe. Hierbei lassen sich aromatische oder aliphatische Polyepoxide einsetzen.

Geeignete Beispiele für Verbindungen des Typs A3 sind Ketone, wie Acetylaceton, Benzoylaceton, Acetyldibenzoylmethan, ferner Ester der gegebenenfalls alkylsubstituierten Acetessigsäure wie α-und/oder γ-Methylacetessigsäure, oder der Acetondicarbonsäure, esterartig gebundene Malonsäureeinheiten der Malonsäure und deren Monoalkylderivate, geradkettig oder verzweigt, mit 1 bis 3 C-Atomen im Alkylrest, z.B. Methyl, Ethyl und n-Butyl oder auch Phenyl, oder der Cyanessigsäure mit ein- bis 6-wertigen Alkoholen mit 1 bis 10 C-Atomen. Die alkylsubstituierten Ester, z.B. α-Methyl- oder α,γ-Dimethylacetatessigester, haben nur ein aktives H-Atom und werden daher vorzugsweise in Form von Di- oder Polyestern mehrwertiger Alkohole eingesetzt, um eine genügende Anzahl reaktiver Gruppen zur Verfügung zu haben. Geeignete Alkohole für die Veresterung vorstehender Säuren sind z.B. Methanol, Ethanol, Butanol, Octanol und/oder, was bevorzugt ist, mehrwertige Alkohole bzw. Polyhydroxyverbindungen. Weitere Beispiele für A3 sind z.B. Acetessigester, Ethandiolbisacetessigester, Glycerintris-malonsäureester, Trimethylolpropantris-acetessigester, Teilester dieser Säuren mit mehrwertigen Alkoholen, ebenfalls die entsprechenden Ester von OH-Gruppen enthaltenden Acrylharzen, Polyestern, Polyethern, Polyesteramiden und -imiden, Polyhydroxylaminen, ferner Nitrile dieser Säuren, sofern diese existieren, z.B. Malonsäuremono- oder -dinitril, Alkoxycarbonyl-methanphosphonsäureester und die entsprechenden Bis-methanphosphonsäureester. Die vorstehend genannten Säuren können auch in Form von Amiden an Amine, vorzugsweise Polyamine, gebunden sein, die auch Oligomere und/oder Polymere einschließlich Aminharze umfassen, wobei aliphatische Amine bevorzugt sind.

Wenn man von Polyaminen ausgeht, lassen sich Verbindungen A3 in Form von Amiden herstellen. So kann z.B. von 1 Mol eines Alkylendiamins ausgehen, daß mit 2 Mol Acetessigester umgesetzt wird unter Bildung einer Verbindung, die ebenfalls vier durch Amindgruppen aktivierte H-Atome aufweist.

Als Verbindungen für A3 eignen sich auch reaktive Nitroverbindungen, z.B. Nitroessigsäurederivate, wie Tris-(nitroessigsäure)-glycerinester oder Trimethylolpropan-nitroessigsäureester.

Unter Verbindungen für A3, die Gruppen des Typs -CH- bilden, sind z.B. Diketen sowie dessen Mono-α-Alkylsubstitutionsprodukte, ferner Tetrahydrodioxin zu nennen, die mit geeigneten Komponenten unter Bildung von Acetessigester- oder -amid-Gruppen reagieren können.

Die Härterkomponenten A können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente A polare Gruppen enthält, z.B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z.B. Carboxylgruppen, im Oligmomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Die erfindungsgemäßen Bindemittelzusammensetzungen können zur Viskositätseinstellung auch 2-Acetoacetoxy-ethylmethacrylat als Reaktivverdünner enthalten.

Als weitere Bindemittelkomponente B) wird in den erfindungsgemäßen Bindemittelzusammensetzungen eine Verbindung eingesetzt, die mindestens zwei ungesättigte funktionelle Gruppen der allgemeinen Formel (V) R₁R₂C=CR₃-CO- aufweist, worin R₁, R₂ und R₃ wie in den Ansprüchen definiert sind. Diese Gruppen können über kurz- oder langkettige Reste, Oligomere und/oder Polymere von zwei- oder mehrwertigen Alkoholen, Di- oder Polyaminen oder Aminoalkoholen miteinander verbunden sein, wobei diese Oligomere und Polymeren z.B. Zahlenmittel des Molekulargewichts Mn von 100 bis 10000 g/mol aufweisen können. Als Oligomere und Polymere kommen beispielsweise gesättigte und/oder ungesättigte zwei oder mehrere Hydroxylgruppen enthaltende Polyether, Polyester oder Polyurethane in Frage, z. B. solche auf der Basis von Maleinsäure, Phthalsäure und Diolen, Hydroxylgruppen enthaltenden Acrylharzen, aliphatischen oder vorzugsweise aromatischen, gegebenenfalls Hydroxylgruppen enthaltenden Epoxidharzen, z.B. solchen auf der Basis von Diphenylolpropan und/oder -methan, Hydantoin und/oder Aminharzen. Dabei kann der Rest der allgemeinen Formel (V) esterartig gebunden sein, z.B. durch Umsetzung von Glycidyl(meth)acrylat mit Carboxylgruppen von säurefunktionellen Polyethern, Polyestern, Polyurethanacrylaten, Poly(meth)acrylaten oder durch Anlagerung von Acryl- oder Methacrylsäure oder deren Derivate an Epoxygruppen von Epoxidharz oder durch Veresterung an Hydroxylgruppen von Polyolen. Geeignete mehrwertige Alkohole sind beispielsweise Alkandiole, die verschiedenen Propan-, Butan-, Hexan- und Octandiole, oder deren Homologe, die entsprechenden oligomeren Ether, ferner Glycerin, Trimethylolpropan, Hexantriol, Pentaerythrit, Dipentaerythrit, Sorbit, sowie Polyvinylalkohol, sowie ethoxylierte und propoxylierte Varianten.

Die Gruppen der allgemeinen Formel (V) können auch über NH-Gruppen und/oder OH-Gruppen an Polyamine mit mindestens zwei NH-Gruppen oder mindestens einer NH-Gruppe und mindestens einer OH-Gruppe gebunden sein. Als NH-Gruppen enthaltende Ausgangsverbindungen für derartige Verbindungen können beispielsweise Di- und Polyamine genannt werden, wie Alkylendiamine und deren Oligomere, wie Ethylendiamin, Propylendiamin, Diethylentriamin, Tetramine und höhere Homologe dieser Amine, sowie Aminoalkohole wie Diethanolamin oder dergleichen. Als Amine kommen z.B. auch Aminocarbonsäureester mehrwertiger Alkohole in Frage. Als Verbindung mit NH-Gruppen kommen z.B. in Frage Acryl- oder Methacrylsäurepolyamide, ferner Polyurethane, z.B. Polyisocyanate, die in Form von Polyurethangruppen verkappt sind, wie solche, die durch Umsetzung von Hydroxyethylacrylat mit Polyisocyanaten erhalten werden, Aminharze wie Methoxymelamine, vorzugsweise Hexamethylolmelamin, Harnstoffharze, wobei der Rest der allgemeinen Formel (V) mit der Gruppierung -CO- an die Amingruppen dieser Verbindungen als Amid gebunden ist. Falls diese Aminverbindungen über OH-Gruppen bzw. Hydroxyalkylgruppen verfügen, ist es auch möglich, daß der Rest der Formel (V) esterartig oder aber über eine Ethergruppe an diese Verbindungen gebunden ist. Für die Etherbindung des Restes der Formel (V) kann man von einem Hydroxyalkylester oder einem Hydroxyalkylamid einer ungesättigten Säure wie Acrylsäure ausgehen.

Der Rest der allgemeinen Formel (V) in der Komponente B) kann von einer ein- oder mehrfach ungesättigten Monocarbonsäure, z.B. mit 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure, vorzugsweise Acrylsäure und/oder Methacrylsäure abgeleitet sein.

Ebenfalls möglich ist die Verwendung von Addukten aus Copolymeren der Verbindung -Dimethyl-m-isopropenylbenzylisocyanat (im weiteren Text stets m-TMI genannt) mit Hydroxy (meth)acrylmonomeren. Die Comonomeren, die zur Copolymerisation mit m-TMI verwendet werden können, sind z.B. übliche Ester der (Meth)acrylsäure, wie sie vorstehend zur Erläuterung der Polyole bereits genannt wurden. Mögliche Hydroxy (meth)acrylmonomere zur Adduktbildung mit m-TMI-Copolymeren sind z.B. Hydroxyethyl(meth)acrylat, Hydroxypropyl(meth)acrylat oder Butandiolmonoacrylat. Ebenfalls möglich ist die Verwendung von Additionsprodukten von Hydroxyethylmethacrylat an Caprolacton.

Beispiele für die Komponente B sind Hexandioldi(meth)acrylat und Dipropylenglykoldi(meth)acrylat und Beispiele für tri- und tetrafunktionelle Monomere sind Trimethylolpropantri (meth)acrylat und Pentaerythrit-tri - oder -tetra(meth)acrylat, sowie ethoxylierte und propoxylierte Varianten.

Beispiele für Oligomere oder Prepolymere sind (meth)acrylfunktionelle (Meth)acrylpolymere, Epoxidharz-(meth)acrylate, z.B. Umsetzungsprodukte aus 2 Mol (Meth)acrylsäure und handelsüblichen Epoxidharzen, wie z.B. Epicote® 828, Polyester(meth)acrylate, Amin(meth)acrylate, ungesättigte Polyester, ungesättigte Polyurethane, Silicon(meth)acrylate oder Kombinationen davon.

Der in der vorliegenden Beschreibung verwendete Ausdruck (Meth)acryl bzw. (meth)acryl bedeutet Acryl- und/oder Methacryl bzw. acryl und/oder methacryl.

Die Komponente B) kann frei von Lösemitteln sein oder aber Restlösemittel von ihrer Herstellung enthalten, z.B. aliphatische und/oder aromatische Kohlenwasserstoffe. Der Festkörpergehalt kann auf gewünschte Werte eingestellt werden, z.B. durch Entfernen des Restlösemittels, beispielsweise durch Destillation oder durch Zusatz von Wasser oder Lösemitteln, die für die anschließende Bereitung von Überzugsmitteln benötigt werden und später beschrieben werden. Bevorzugt wird das gleiche Lösemittel wie für die Komponente A) verwendet.

Die erfindungsgemäßen Überzugsmittel können als Komponente C) in der Bindemittelkomponente auch zusätzliche durch energiereiche Strahlen härtbare Materialien enthalten, bei denen es sich um Monomere, Oligomere oder Polymere bzw. Copolymere handeln kann. Sie unterliegen keiner Einschränkung. Es kann sich sowohl um radikalisch als auch um ionisch polymerisierbare Verbindungen handeln. Bevorzugt sind radikalisch polymerisierbare Verbindungen, wobei diese auch günstig mit ionisch polymerisierbaren Verbindungen im Gemisch vorliegen können.

Beispiele für radikalisch polymerisierbare Verbindungen sind übliche strahlenhärtbare, insbesondere in UV-härtbaren Lacken verwendete Verbindungen auf der Basis von Monomeren, Oligomeren, Polymeren, Copolymeren oder Kombinationen davon, mit einer oder mehrerer olefinischen Doppelbindungen, wie beispielsweise Acrylsäure- und Methacrylsäureester. Beispiele für monofunktionelle Monomere sind Butyl(meth)acrylat und Hydroxyethyl(meth)acrylat. Beispiele für difunktionelle Monomere sind Diacrylate, wie sie vorstehend als Beispiele für die Komponente B) aufgeführt wurden.

Als Monomere können aber auch Vinylverbindungen vorliegen. Dabei kann es sich um mono- und/oder polyfunktionelle Monomere handeln. Beispiele für monofunktionelle Monomere sind Hydroxybutylvinylether, Styrol, N-Vinylpyrrolidon. Beispiele für polyfunktionelle Monomere sind Butandioldivinylether, Cyclohexandivinylether.

Die Komponente D) in der Bindemittelzusammensetzung ist eine Polyaminkomponente mit mindestens zwei funktionellen Gruppen der Formel

R⁴HN -,

worin R⁴ ein Wasserstoffatom oder ein gerade oder verzweigter Alkylrest mit 1 bis 10 Kohlenstoffatomen oder Cycloalkylrest mit 3 bis 8, bevorzugt 5 oder 6 Kohlenstoffatomen sein kann, enthält.

Geeignete Polyamine sind Diamine und Amine mit mehr als zwei Aminogruppen, wobei die Aminogruppen primär und/oder sekundär sein können. Darüber hinaus sind als Polyamine beispielsweise auch Addukte geeignet, die aus Polyaminen mit mindestens zwei primären Aminogruppen und mindestens einer, bevorzugt einer, sekundären Aminogruppen bestehen, mit Epoxyverbindungen, Polyisocyanaten und Acryloylverbindungen. Darüber hinaus sind auch Aminoamide und Addukte aus carboxyfunktionalisierten Acrylaten mit Iminen geeignet, die mindestens zwei Aminogruppen aufweisen.

Beispiele für geeignete Di- und Polyamine sind beispielsweise in den EP-A-0 240 083 und EP-A-0 346 982 beschrieben. Beispiele hierfür sind aliphatische und/oder cycloaliphatische Amine mit 2 bis 24 C-Atomen, die 2 bis 10 primäre Aminogruppen, bevorzugt 2 bis 4 primäre Aminogruppen, und 0 bis 4 sekundäre Aminogruppen enthalten. Repräsentative Beispiele hierfür sind Ethylendiamin, Propylendiamin, Butylendiamin, Pentamethylendiamin, Hexamethylendiamin, 4,7-Dioxa-decan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z.B. solche mit dem Handelsnamen Jeffamine der Jefferson Chemical Company, Bis-(3-aminopropyl)ethylamine, 3-Amino-1-(methylamino)-propan und 3-Amino-1(cyclohexylamino)propan.

Beispiele für gebräuchliche Polyamine auf der Basis von Addukten von polyfunktionellen Aminkomponenten mit di- oder polyfunktionellen Epoxyverbindungen sind solche, die hergestellt werden unter Verwendung von beispielsweise di- oder polyfunktionellen Epoxyverbindungen, wie Diglycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxy-Gruppen enthalten, wie Glycidyl(meth)acrylat, N-Glycidyl(meth)-acrylamid, und/oder Allylglycidylether, wahlweise copolymerisiert mit verschiedenen anderen ethylenisch ungesättigten Monomeren, Glycidylether von Fettsäuren mit 6 bis 24 C-Atomen, epoxidierte Polyalkadiene, wie epoxidiertes Polybutadien, Hydantoin-Epoxy-Harze, Glycidylgruppen-haltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20-100^{o}C erfolgen, bevorzugt aber zwischen 20-60^{o}C. Gegebenenfalls kann mit 0,1 bis 2 Gew.-% einer Lewis-Base wie Triethylamin oder einem Ammoniumsalz wie Tetrabutylammoniumjodid katalysiert werden.

Gebräuchliche Isocyanate für die Herstellung der Polyaminkomponente auf der Basis von Polyamin-Isocyanat-Addukten sind aliphatische, cycloaliphatische und/oder aromatische Di- Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, Hexamethylendiisocyanat, 2,2,4-Trimethylhexamethylen-diisocyanat, 2,4,4-Trimethylhexamethylen-diisocyanat, ω,ω'-Dipropyletherdiisocyanat, 1,3-Cyclopentandiisocyanat, 1,2- und 1,4-Cyclohexandiisocyanat, Isophorondiisocyanat, 4-Methyl-1,3-diisocyanat-cyclohexan, Transvinylidendiisocyanat, Dicyclohexylmethan-4,4'-diisocyanat, 3,3'-Dimethyl-dicyclohexylmethan-4,4'-diisocyanat, Toluyendiisocyanat, 1,3-Bis(1-isocyanato-1-methylethyl)benzol, 1,4-Bis(1-isocyanato-1-methylethyl)-benzol, 4,4'-Diisocyanatodiphenyl, 3,3'-Dichloro-4,4'-diisocyanatodiphenyl, Addukte aus 2 Molen eines Diisocyanates, z.B. Hexamethylendiisocyanat oder Isophorondiisocyanat an ein Mol eines Diols, z.B. Ethylenglykol, das Addukt aus 3 Molen Hexamethylendiisocyanat an 1 Mol Wasser (erhältlich unter dem Handelsnamen Desmodur N von der Bayer AG), das Addukt aus 1 Mol Trimethylolpropan und 3 Molen Toluidendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung von Polyaminen an die genannten Isocyanatverbindungen erfolgt beispielsweise in einem Temperaturbereich von 20 - 80^{o}C, bevorzugt 20 - 60^{o}C. Gegebenenfalls kann durch Zugabe von 0,1 bis 1 Gew.-% eines tertiären Amins, wie Triethylamin und/oder 0,1 bis 1 Gew.-% einer Lewis-Säure, wie Dibutylzinnlaurat, katalysiert werden.

Beispiele für di- oder polyfunktionelle acryloylungesättigte Verbindungen zum Herstellen von Polyaminaddukten sind in der US-PS 4,303,563 beschrieben, z.B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropandiacrylat, Pentaerythrittetraacrylat und Pentaerythrittriacrylat. Weitere Beispiele für polyfunktionelle acryloyl-ungesättigte Acrylate sind:
1) Urethanacrylate, erhalten durch die Reaktion einer Isocyanatgruppe eines Polyisocyanates mit einem Hydroxyacrylat, z.B. Hexamethylendiisocyanat und Hydroxyethylacrylat, die Herstellung ist beschrieben in US-PS 3, 297,745,
2) Polyetheracrylate, erhalten durch Umesterung eines hydroxyterminierten Polyethers mit Acrylsäure, beschrieben in US-PS 3,380,831,
3) Polyesteracrylat, erhalten durch Veresterung eines Hydroxyl-gruppenhaltigen Polyesters mit Acrylsäure, beschrieben in US-PS 3,935,173,
4) polyfunktionelle Acrylate, erhalten durch die Reaktion eines Hydroxyl-funktionalisierten Acrylates, wie z.B. Hydroxyethylacrylat mit
   a) Dicarbonsäuren mit 4 - 15 C-Atomen,
   b) Polyepoxiden mit terminalen Glycidylgruppen,
   c) Polyisocyanaten mit terminalen Isocyanatgruppen, beschrieben in US-PS 3,560,237,
5) Acrylat-terminierte Polyester, erhalten durch die Reaktion von Acrylsäure, einem Polyol mit mindestens drei Hydroxyfunktionen und einer Dicarbonsäure, beschrieben in US-PS 3,567,494,
6) Polyacrylat, erhalten durch die Reaktion von Acrylsäure mit einem Epoxidfunktionen enthaltenden epoxidiertem Öl, wie Sojabohnenöl oder Leinsamenöl, beschrieben in US-PS 3,125,592,
7) Polyacrylat, erhalten durch die Reaktion von Acrylsäure mit Epoxidgruppen eines Diglycidylethers von Bisphenol A, beschrieben in US-PS 3,373,075,
8) Polyacrylat, erhalten durch die Reaktion von Acrylsäure an ein Epoxid-funktionelles Vinylpolymer, z.B. Polymere mit Glycidylacrylat oder Vinylglycidylether, beschrieben in US-PS 3,530,100,
9) Polyacrylat, erhalten durch die Reaktion von Acrylsäureanhydrid mit Polyepoxiden, beschrieben in US-PS 3,676, 398,
10) Acrylat-Urethanester, erhalten durch die Reaktion eines Hydroxyalkylacrylates, mit einem Diisocyanat und einem Hydroxyl-funktionalisierten Alkydharz, beschrieben in US-PS 3,676,140,
11) Acrylat-Urethanpolyester, erhalten durch die Reaktion eines Polycaprolactondiols- oder -triols mit einem organischen Polyisocyanat und mit einem Hydroxyalkylacrylat, beschrieben in US-PS 3,700,634,
12) Urethan-Polyacrylat, erhalten durch die Reaktion eines Hydroxy-funktionalisierten Polyesters mit Acrylsäure und einem Polyisocyanat, beschrieben in US-PS 3,759,809.

Die Acryloyl-Endgruppen der Di- bzw. Polyacrylmonomeren bzw. der Polyacrylate aus den Beispielen 1) bis 12) können mit Polyaminen funktionalisiert werden. Die Anlagerung kann z.B. in einem Temperaturbereich von 20 - 100^{o}C, bevorzugt bei 40 - 60^{o}C, erfolgen.

Eine weitere Methode zur Synthese eines Amin-funktionalisierten-Härters ist in der EP-A-0 002 810 beschrieben. Hier werden Acrylsäureestercopolymere mit Diaminen unter Alkoholabspaltung amidisiert. Die dabei erhaltene reaktive Gruppe besitzt folgende Struktur: 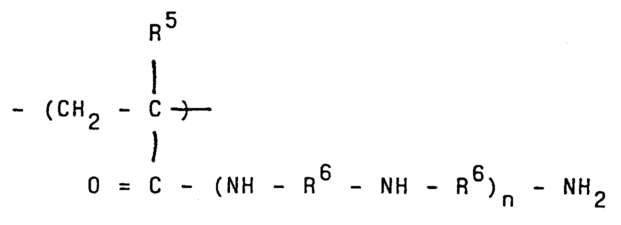
- R⁵ =: H oder CH₃
- R⁶ =: Alkylengruppen mit 2 oder 3 C-atomen, die gleich oder verschieden sein können
- n =: 0, 1, 2 oder 3
wobei der Rest 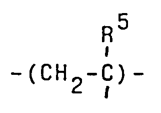
aus dem Acrylsäureestercopolymergerüst stammt.

Das Acrylsäureestercopolymere besitzt ein Zahlenmittel des Molgewichts Mn von 1000 - 20000, bevorzugt 2000 - 5000. Beispiele für mögliche Comonomere sind Ester der (Meth)acrylsäure wie z.B. Methyl-, Ethyl-, Butyl-, Cyclohexyl (meth)acrylat, Hydroxyethyl(meth)acrylat, Hydroxypropyl (meth)acrylat, weiterhin (Meth)acrylsäure, Styrol und Vinyltoluol.

Besonders bevorzugt ist Methylacrylat, da dieses Monomer der Aminolyse besonders leicht zugänglich ist. Der Anteil an Methacrylat am Copolymeren beträgt 2 bis 35 Gew.-%. Die Herstellung der Copolymere erfolgt durch Lösungspolymerisation in üblichen Lösungsmitteln wie Toluol, Xylol, Acetate, z.B. Butylacetat oder Ethylglykolacetat, Ethern wie Tetrahydrofuran oder Aromatengemische wie das Handelsprodukt Solvesso 100. Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und wurden bereits zuvor beschrieben.

Ebenfalls als Härter verwendbar sind Reaktionsprodukte aus der Umsetzung eines (Meth)acrylsäurecopolymeren mit Alkyleniminen, wie sie in der EPA-0 179 954 beschrieben wurden. Die erhaltenen funktionellen Gruppen besitzen die Struktur: 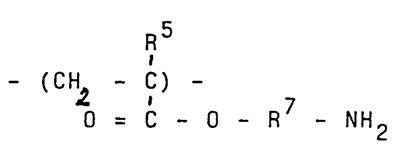
- R⁵ =: H oder CH₃
- R⁷ =: Alkylengruppe mit 2 bis 4 C-Atomen,
wobei der Rest 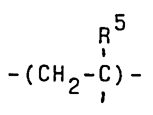
wie vorstehend definiert ist.

Neben (Meth)acrylsäure kann das Copolymere auf weiteren Comonomeren basieren.

Beispiele für verwendbare Comonomere sind α,β-ungesättigte Monomere, radikalisch polymerisierbare Monomere aus der Gruppe der Ester von α,β-ungesättigten Carbonsäuren, wie Acrylsäure oder Methycrylsäure, wobei Beispiele für die Alkoholkomponenten der Ester Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sihd Vinylester kurzkettiger Carbonsäuren, wie Vinylacetat, Vinylpropionat und Vinylbutyrat.

Beispiele für Alkylenimine sind z.B. Propylen- oder Butylenimin.

Beispiele für ebenfalls erfindungsgemäß als Härter verwendbare Polyamine sind auch solche, die hergestellt werden durch Umsetzung von Copolymeren von α-Dimethyl-m-isopropenylbenzylisocyanat (m-TMI), die ein Zahlenmittel des Molgewichts (Mn) von 1000 bis 10000 aufweisen, mit Mono- oder Diketiminen, die entweder eine OH- oder sec.NH-Gruppierung enthalten.

Als Comonomere zur Herstellung der TMI-Copolymeren können alle üblichen vinylisch polymerisierbaren Monomeren ohne OH-Funktionalität verwendet werden, wie z.B. vorstehend definiert, beispielsweise Ester der (Meth)acrylsäure wie z.B. Methyl-. Ethyl-, Butyl-, Isobutyl-, Ethylhexyl-, Cyclohexyl- und/oder Lauryl(meth)-acrylat, weiterhin Styrol, Vinyltoluol und/oder α-Methylstyrol. Die Herstellung der Copolymere erfolgt über übliche radikalische Lösungspolymerisation, wie sie dem Fachmann bekannt ist. Gearbeitet wird beispielsweise in aprotischen organischen Lösemitteln, z.B. Toluol und Xylol, und Estern, z.B. Butylacetat.

Verwendet hierzu werden im allgemeinen übliche Radikalinitiatoren, wie Peroxide und Azoverbindungen. Die Reaktion erfolgt z.B. unter Erwärmen, beispielsweise auf Temperaturen von 80 bis 140^{o}C.

Das monomere TMI kann in einem Bereich von 3 bis 40 Gew.-%, bezogen auf das Gewicht sämtlicher Monomeren copolymerisiert werden, bevorzugt aber in einem bereich von 5 bis 25 Gew.-%.

Das Isocyanat-terminierte Copolymer wird anschließend mit einem oder mehreren mit OH- oder sec.NH-funktionalisierten Mono- und/oder Diketiminen und/oder Mono- und/oder Dialdiminen umgesetzt.

Die Herstellung der Ketimine und/oder Aldimine (im Folgenden wird zur Vereinfachung der Ausdruck "Ketimine" gewählt, der jedoch auch Aldimine einschließen soll) erfolgt z.B. durch Umsetzung von Alkanolaminen oder Di- bzw. Triaminen, die mindestens eine primäre Aminogruppe, im Falle der Di- bzw. Triaminen zusätzlich eine sekundäre Aminfunktion tragen, mit Aldehyden und/oder Ketonen unter Wasserabspaltung.

Beispiele für Alkanolamine sind:
Monoethanolamin, Monopropanolamin, Monohexanolamin oder 2-Amino-2-hydroxypropan.

Beispiele für Di- bzw. Triamine , die mindestens eine primäre Aminogruppe und eine sekundäre Aminogruppe tragen, sind:
N-Methylpropylamin, Diethylentriamin, Dipropylentriamin oder Bishexamethyltriamin.

Zur Herstellung der TMI-Acrylat/Ketimin-Addukte müssen die primären Aminogruppen der oben genannten Amine blockiert werden.

Hierbei werden die primären Amine mit Aldehyden oder Ketonen unter Wasserabspaltung zu Schiffschen Basen bzw. Aldiminen oder Ketiminen umgesetzt. Beispiele für solche Aldehyde und Ketone sind:
C₃-C₁₀-Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die OH- oder sec.NH-funktionalisierten Mono- oder Diketimine werden bei der Anlagerung an das Isocyanat-terminierte Copolymere bevorzugt im Unterschuß eingesetzt, bevorzugt werden 90 bis 95 % der Isocyanatgruppen mit OH- oder NH-Gruppen umgesetzt. Die verbleibenden überschüssigen Isocyanatgruppen werden in einem letzten Reaktionsschritt mit Monoalkoholen wie z.B. Ethanol, Fropanol oder Butanol urethanisiert.

Zur Synthese der Ketimin- bzw. Aldimin-funktionalisierten (verkappten) Polyamine wird beispielsweise zuerst ein TMI-Copolymerisat durch eine radikalische Lösungspolymerisation hergestellt. Anschließend wird ein Alkanolamin oder Di- bzw. Triketimin hergestellt, das sowohl mindestens eine primäre als auch eine sekundäre Aminfunktion trägt, mit dem gewünschten Blockierungsmittel Aldehyd oder Keton in einem organischen Lösemittel, das mit Wasser ein azeotropes Gemisch bildet, vorgelegt. Durch Erhitzen dieses Gemisches wird das entstehende Reaktionswasser azeotrop abdestilliert.

Es ist günstig, die Herstellung unter Inertgas durchzuführen. Das Blockierungsmittel kann im Überschuß eingesetzt werden, das im Anschluß an die Reaktion abdestilliert werden kann. Es ist zweckmäßig, als Verkappungsmittel ein Keton/Aldehyd zu wählen, das selbst mit Wasser ein Azeotrop bildet, so daß auf ein zusätzliches organisches Lösemittel verzichtet werden kann. Zur Addition des OH- bzw. sec.NH-funktionalisierten Ketimins bzw. Aldimins an das Isocyanat-terminierte Copolymerisat wird das Ketimin bei z.B. 80^{o}C unter Inertgas vorgelegt und das Copolymerisat in z.B. zwei Stunden zudosiert. Mit Hilfe einer Lewis-Säure, wie z.B. Dibutylzinnlaurat kann die Reaktion gegebenenfalls katalysiert werden. Nach Beendigung der Zudosierung wird, sofern das Ketimin im Unterschuß vorliegt, ein Alkohol, z.B. Butanol zugefügt. Es wird gegebenenfalls noch bei erhöhter Temperatur z.B. etwa 10 bis 30 min gerührt.

Die vorstehende Herstellungsweise stellt lediglich ein Beispiel für eine Verfahrensweise dar. Es kann beispielsweise auch so gearbeitet werden, daß das Copolymerisat vorgelegt wird und das Ketimin zugesetzt wird.

Die terminierten (freien) Aminogruppen der Polyamin-Härterkomponente D können verkappt sein, z.B. mit Ketonen oder Aldehyden unter Ausbildung Schiffscher Basen.

Alle bisher beschriebenen Polyamine besitzen gegenüber den erfindungsgemäßen Bindemittelkomponenten eine sehr hohe Reaktivität, was sich in einer sehr geringen Topfzeit äußert. Aus diesem Grunde kann es zweckmäßig sein, die terminierten Amingruppen der genannten Polyamine mit Aldehyden oder Ketonen unter Wasserabspaltung zu Schiffschen Basen bzw. Aldimiden oder Ketimiden umzusetzen. Beispiele für zur Verkappung verwendbare Aldehyde und Ketone sind C₃-C₁₀-Verbindungen, wie Hexalaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die Komponente D enthält eingemischt als Komponente E Katalysatoren in Form von Lewis-Basen oder Brönstedt-Basen wobei die konjugierten Säuren der letzeren einen pKA-Wert von mindestens 10 haben. Die Komponente E kann aus einem oder mehreren Katalysatoren bestehen. Als besonders geeignet erwiesen sich Lewis-Basen, wie z.B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyldiisopropylamin oder N-Butyldiethanolamin, sowie Amidinen wie Diazabicycloundecen (DBU), und Guanidinen, wie z.B. N',N',N',N'-Tetramethylguanidin. Weitere Beispiele sind alkyl- oder arylsubstituierte Phosphane, wie z.B. Tributylphosphan, Triphenylphosphan, Tris-p-tolylphosphan, Methyl-diphenylphosphan, sowie hydroxy- und aminfunktionalisierte Phosphane, wie z.B. Trishydroxymethylphosphan und Tris-dimethylaminoethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammmoniumhydroxide oder -halogenide, wie z.B.Tetraethyl- oder Tetrabutylammoniumhydroxid oder -fluorid, sowie Trialkyl- oder Triarylphosphoniumsalze oder -hydroxide.

Die Menge der Katalysatoren beträgt im allgemeinen 0,01 bis 5 Gew.-%, vorzugsweise 0,02 bis 2 Gew.-%, bezogen auf den Gesamtfeststoffgehalt der Komponenten A, B, C und D.

Die erfindungsgemäßen Beschichtungsmassen enthalten als Komponente F übliche Photoinitiatoren, wie sie für die radikalische und die ionische Polymerisation eingesetzt werden. Geeignet sind beispielsweise Initiatoren, die im Wellenlängenbereich von 190 bis 400 nm absorbieren.

Beispiele für verwendbare radikalische Initiatoren sind chlorhaltige Initiatoren, wie chlorhaltige aromatische Verbindungen, z.B. beschrieben in US-A-4,089,815; aromatische Ketone, wie in US-A-4,318,791 und EP-A-0 161 463 beschrieben; Hydroxyalkylphenone, wie in US-A-4,347,111 beschrieben; wasserlösliche Initiatoren, beispielsweise auf der Basis von Hydroxylalkylphenonen, wie in US-A-4,602,097 beschrieben, ungesättigte Initiatoren wie OH-funktionelle aromatische Verbindungen, die beispielsweise mit Acrylsäure verestert wurden, wie in US-A-3,929,490, EP-A-0 143 201 und EP-A-0 341 560 beschrieben; oder Kombinationen von derartigen Initiatoren, wie sie beispielsweise in US-A-4,017,652 beschrieben werden.

Spezielle Beispiele sind 2-Methyl-2-hydroxy-propiophenon, Benzophenon, Thioxanthonderivate, Acylphospinoxide und Michlers Keton.

Besonders bevorzugte verwendbare radikalische Initiatoren sind Phosphinoxide und Kombinationen von Phosphinoxiden mit weiteren üblichen Initiatoren, wie vorstehend beschrieben.

Beispiele verwendbarer kationischer Initiatoren sind Triarylsulfoniumsalze der allgemeinen Formel

(Aryl)₃ S⁺ X⁻

worin Aryl einen Arylrest, wie den Phenylrest, darstellt und X⁻ ein Anion ist, wie SbF₆⁻, PF₆⁻, AsF₆⁻ und BF₄⁻, wie in US-A-4,417,061, EP-A-0 327 194 und DE-A-2 904 626 beschrieben. Weitere Beispiele für kationische Initiatoren sind Oxoniumsalze, Iodoniumsalze und Diazoniumsalze, wie sie beispielsweise in folgenden Literaturstellen beschrieben werden: EP-A-0 464 131, US-A-4,421, 904, EP-A-0 145 633, EP-A-0 310 881, EP-A-0 310 882 (Iodoniumsalze); DE-A-3 808 590 und DE-A-3 808 591 (Diazoniumsalze).

Außer diesen Initiatoren können auch Metallocen-Komplexe eingesetzt werden, wie z.B. beschrieben in EP-A-0 094 915.

Bei den erfindungsgemäßen Bindemittelzusammensetzungen handelt es sich um sogenannte Zweikomponenten-Systeme.

Die Komponenten A, B, C und F werden gemeinsam als Bindemittelkomponente 1 und die Komponenten D und E gemeinsam als Härterkomponente 2 gelagert.

Dies bedeutet, daß die Komponenten 1 und 2 getrennt gelagert werden und erst vor der Anwendung bzw. zur Anwendung beispielsweise zur Herstellung von Überzugsmitteln vermischt werden.

Die erfindungsgemäßen Überzugsmittelzusammensetzungen können Pigmente und/oder Füllstoffe enthalten.

Als Füllstoffe können z.B. Sulfate wie Bariumsulfat, Kieselsäuren, wie pyrogene Kieselsäuren (Aerosile) und Silikate, wie Talkum eingesetzt werden. Bevorzugt sind Mengen von 10 - 80 Gew.-% für Spachtel und Füller bezogen auf den Gesamtfeststoffgehalt.

Als Pigmente können lackübliche Pigmente, wie sie beispielsweise für ungesättigte Polyesterharze üblich sind, eingesetzt werden. Es handelt sich um übliche deckende anorganische oder organische Pigmente, wie Titandioxid, Ultramarinblau, Eisenoxide und Phthalocyaninblau.

Gegebenenfalls weitere verwendbare Hilfs- und Zusatzstoffe sind Thixotropier-, Glätt-, Mattierungs- und Verlaufsmittel.

Die erfindungsgemäßen Überzugsmittelzusammensetzungen sind bevorzugt frei von organischen Lösungsmitteln, können aber organische Lösungsmittel und/oder Wasser enthalten, beispielsweise bis zu 50 Gew.-%, bezogen auf die Überzugsmittelzusammensetzung.

Geeignete organische Lösemittel für die Herstellung von Überzugsmitteln, beispielsweise Lacken, sind solche, wie sie auch bei der Herstellung der Einzelkomponenten A, B und D verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Die aus den erfindungsgemäßen Bindemitteln hergestellten Überzugsmittel können auf die gewünschte Applikationsviskosität durch entsprechende Regelung des Zusatzes von Lösemitteln und/oder Additiven eingestellt werden.

Als weitere Hilfs- und Zusatzstoffe können den Überzugsmitteln Sensibilisatoren zugefügt werden. Dabei handelt es sich bevorzugt um organische aromatische Verbindungen mit/ohne Heteroatome. Beispiele für aromatische Sensibilisatoren ohne Heteroatomen sind Anthracen und Perylen. Beispiele für aromatische Sensibilisatoren mit Heteroatomen sind Thioxanthenderivate, Xanthonderivate und Sulfonium-Komplexsalze.

Die Überzugsmittel können je nach Mengenverhältnis der Komponenten 1 zur Komponente 2, Äquivalentgewicht und Katalysatormenge beispielsweise auf Topfzeiten zwischen wenigen Minuten und 24 Stunden eingestellt werden.

Die Applikation der so hergestellten Überzugsmittel kann in üblicher Weise erfolgen, beispielsweise durch Tauchen, Spritzen, Streichen oder auf elektrostatischem Wege. Anschließend werden gegebenenfalls vorhandene Lösemittel oder Wasser durch Wärmebehandlung (beispielsweise Infrarot-Strahlung oder Heißluft) verdampft.

Die erfindungsgemäßen Überzugsmittel/Zweikomponenten-Systeme sind nach Applikation und gegebenenfalls Abdampfen von Lösemitteln durch Strahlung härtbar. Insbesondere sind sie zur Härtung durch UV-Strahlung oder durch Elektronenstrahlung geeignet. Es sind auch Kombinationen von IR/UV-Strahlung oder IR/Elektronenstrahlung geeignet. Als Strahlungsquellen können übliche für die UV- bzw. Elektronenstrahlung geeignete Quellen eingesetzt werden, wie Quecksilber-Hochdruckstrahler und Quecksilber-Mitteldruckstrahler. In tieferen Schichten findet anschließend, z.B. innerhalb einiger Stunden, eine Durchhärtung aufgrund Michael-Addition statt.

Wie erwähnt, können die erfindungsgemäßen Überzugsmittel nach Auftrag auf ein zu beschichtendes Substrat an der Oberfläche rasch durch Strahlung gehärtet werden. Beispielsweise ist eine Härtung der Oberflächenschicht bis zu 2 mm Tiefe innerhalb von 10 min möglich. Hierdurch ergibt sich die Möglichkeit einer sofortigen Bearbeitung der Oberfläche, beispielsweise durch Schleifen. Die Durchhärtung in tieferen Schichten kann während der Oberflächenbearbeitung sowie auch nach der Oberflächenbearbeitung erfolgen.

Die erfindungsgemäßen Überzugsmittel sind somit besonders geeignet als Spachtel- und Füllermassen. Sie weisen den Vorteil auf, daß sie frei von Lösemitteln oder nur mit geringen Lösemittelmengen formuliert werden können. Die erfindungsgemäßen Überzugsmittel lassen sich zudem so formulieren, daß sie frei von toxischen Bestandteilen, wie beispielsweise von Styrol sind.

Selbstverständlich besteht die Möglichkeit, die erfindungsgemäßen Überzugsmittel auch unter Verzicht auf Komponente E zu formulieren und dem Strahlenhärtungsschritt eine thermische Nachbehandlung bei erhöhten Temperaturen von z. B. 100 - 150°C nachzuschalten.

Ein besonders bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen der aus den erfindungsgemäßen Bindemitteln hergestellten Überzugsmittel sind diese besonders auch für Kraftfahrzeug-Reparaturlackierungen geeignet.

Die folgenden Beispiele dienen zur Erläuterung der Erfindung. Alle Teile (T) und prozentangaben (%) beziehen sich auf das Gewicht.

### Herstellungsbeispiel 1

### Herstellung eines acetessigesterfunktionalisierten Polyesters (Komponente A)

1a) Herstellung des Polyesters
   In einem 2-Liter-Dreihalskolben, der mit Rührer, Abscheider, Thermometer und Rückflußkühler versehen ist, werden 336,7 T Trimethylolpropan, 366,8 T Adipinsäure und 297 T Hexandiol mit 5 T unterphosphoriger Säure versetzt. Das Gemisch wird von 180^{o}C in der Schmelze langsam weiter auf 230^{o}C erhitzt, wobei Wasser abgeschieden wird. Die Reaktion wird fortgesetzt, bis eine Säurezahl von 20 mg KOH/g erreicht ist. Anschließend wird unter Wasserstrahlvakuum bis zu einer Säurezahl < 1,5 mg KOH/g kondensiert. Der resultierende Polyester hat dann eine OH-Zahl von 466 mg KOH/g und eine Viskosität von 3200 mPas.
1b) Herstellung eines acetessigesterfunktionaliserten Polyesters auf der Basis des Polyesters von 1a
   In einem 4-Liter-Dreihalskolben, der mit Rührer, Tropftrichter, Abscheider und Rückflußkühler versehen ist, werden 1000 T des unter 1a) hergestellten Polyesters vorgelegt. Zu diesem Harz werden 850 T Acetessigester und 1,5 T 98%ige Ameisensäure gegeben und auf 130^{o}C erhitzt, bis insgesamt 400 T Destillat abgeschieden sind. Im Anschluß daran werden im Vakuum alle flüchtigen Bestandteile abgezogen. Das erhaltene 98,1%ige Harz hat dann eine Viskosität von 3100 mPas und eine Farbzahl von 65 Hazen.

### Beispiel 2

### Gepropftes Polyesterharz 2b (Komponente B):

2a) Ungesättigtes Polyesterharz
   In ein mit Rührer, Thermometer und Destillationskolonne mit aufgesetztem Wasserabscheider versehenes Reaktionsgefäß werden 140,0 T Trimethylolpropan, 435,0 T Neopentylglykol, 370,0 T Hexandiol-1,6 sowie 409,0 g Tetrahydrophthalsäureanhydrid, 294,0 T Maleinsäureanhydrid, 352,0 T Phthalsäureanhydrid und 0,8 T Hydrochinon eingewogen. Nach Zugabe von 160 T Xylol wird unter Stickstoffatmosphäre aufgeheizt. Bei einer Maximaltemperatur von 195^{o}C wird solange Wasser ausgekreist, bis die Säurezahl weniger als 30 mg KOH/g Festharz beträgt. Dann wird abgekühlt und die Destillationskolonne durch eine Destillationsbrücke ersetzt. Unter Vakuum wird das zugesetzte Xylol bei 120^{o}C abdestilliert.
   - Endwerte :: FK (1h/150^{o}C): 99,3 %, SZ: 29,2 mg KOH/g Festharz,
   - Viskosität:: hochviskos, Farbzahl (Gardner): 2-3
2b) Pfropfung von 1a) mit Glycidylmethacrylat
   In einem Reaktionsgefäß mit Rührer, Thermometer und Rückflußkühler werden 2000.0 T Polyesterharz 1a) mit 126,6 T Glycidylmethacrylat und 4,2 T Triphenylphosphin versetzt und unter Stickstoffatmosphäre auf 120^{o}C erhitzt. Die Reaktion wird solange bei 120^{o}C weitergeführt, bis eine Säurezahl von unter 5 mg KOH/g Festharz erreicht ist. Anschließend wird mit 533 T Pentaerythrittriacrylat verdünnt.
   - Endwerte:: FK (1h/150^{o}C): 98,7 %; ca. 80%ig in Pentaerythrittriacrylat SZ: 3,5 mg KOH/g Festharz.

### Herstellungsbeispiel 3

### Herstellung eines Polyketimins (Komponente D)

In einem 4-Liter-Dreihalskolben, der mit Rückflußkühler, Rührer, Thermometer und Destillationsbrücke versehen ist, werden 320 T 2-Methylpentan-1,5-diamin, 1600 T Methylisobutylketon und 1000 T Xylol unter Inertgas vorgelegt. Unter Rühren wird erhitzt, bis Reaktionswasser auskreist (ab etwa 98^{o}C). Es wird solange gerührt, bis kein Wasser mehr abspaltet (98,2 T Wasser gleich 97,7% der Theorie). Die erhaltene Polyketiminlösung wird im Vakuum eingeengt, bis ein theoretischer Festkörper (bezogen auf Ketimin) von 80 % erreicht ist. Die erhaltene Lösung besitzt dann eine Farbzahl von 50 Harzen.

### Beispiel 4

### Herstellung eines Dünnschichtfüllers:

| | Gew.-% |
|---|---|
| Polyester von Beispiel 1b | 15,0 |
| handelsübliches Polyesteracrylat (Komponente B) | 10,0 |
| Netz- und Dispergiermittel | 3,0 |
| pyrogenes Siliciumoxid | 0,5 |
| Titandioxid | 7,0 |
| Talkum | 20,2 |
| 2-Hydroxy-2-methyl-1-phenylpropan-1-on (Photoinitiator) | 4,0 |
| Ketimin von Beispiel 3 | 7,0 |
| Pentaerythrit-triacrylat | 6,0 |
| Diazabicyclooctan | 0,3 |
| Benzylacrylat | 10,0 |
| Phenoxyethylacrylat | 6,0 |
| n-Hexylacrylat | 11,0 |
| | 1̅0̅0̅,̅0̅ |

### Beispiel 5

### Herstellung einer styrolfreien Spachtelmasse

| | Gew.-% |
|---|---|
| Acetessigester-funktionalisierter Polyester (1b) | 18,0 |
| ungesättigtes Polyesterharz (2b) | 8,6 |
| 1:1 Gemisch zweier handelsüblicher Photoinitiatoren (Benzil-dimethylketal/2-Hydroxy-2-methyl-1-phenylpropan-1-on) | 3,8 |
| Ketimin von Beispiel 3 | 4,6 |
| Dipropylenglykoldiacrylat (DPGDA) | 6,0 |
| Isobornylacrylat (IBA) | 10,7 |
| Pentaerythrittriacrylat (PETA) | 6,0 |
| Talkum | 42,0 |
| Diazabicycloundecen | 0,3 |
| | 10̅0̅,̅0̅ |

Die im Beispiel 4 beschriebene Mischung wird mit einer Spritzpistole (1,3 mm Düse, 5 bar) aufgetragen und durch 10minütiges Bestrahlen mit einer Hönle-Handlampe, Typ 250 (Abstand 20 cm), gehärtet. Die Schichtdicke beträgt ca. 150 µm.

Mit der in Beispiel 5 beschriebenen Formulierung wurde mit einem Spachtel eine 1 cm tiefe (≈1,5 cm³) Aushöhlung ausgefüllt. Durch 10minütiges Bestrahlen mit einer Hönle-Handlampe, Typ 250 (Abstand 20 cm), wurde die Oberfläche (≈2 mm) gehärtet. Über Nacht härtet dann die gesamte Formulierung durch.

## Patentansprüche

1. Überzugsmittel, enthaltend
A) 10 - 80 Gew.-% einer oder mehrerer Verbindungen mit im Mittel mindestens zwei CH-aciden Wasserstoffatomen,
B) 10 - 80 Gew.-% einer oder mehrerer α,β-ungesättigter Verbindungen mit mindestens zwei gleichen oder verschiedenen Gruppen der allgemeinen Formel
R₁R₂C=CR₃-CO-
die über den Rest eines zwei- oder mehrwertigen Alkohols, eines Di- oder Polyamins oder Aminoalkohols miteinander verbunden sind, worin R₁, R₂ und R₃ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C) 0 - 50 Gew.-% einer oder mehrerer radikalisch oder ionisch polymerisierbarer Verbindungen,
D) 5 - 50 Gew.-% eines oder mehrerer Polyamine mit mindestens zwei Aminfunktionen, bezogen auf die Summe der Gewichte von A), B) und C), die primär und/oder sekundär und die ganz oder teilweise verkappt sein können, im Molekül,
E) 0,01 - 5 Gew.-%, bezogen auf die Summe der Gewichte der Komponenten A), B), C) und D), eines Katalysators in Form einer oder mehrerer Lewis- oder Brönstedt-Base, wobei die konjugierten Säuren der letzeren einen pKA-Wert von mindestens 10 haben,
F) 0,1 bis 10 Gew.-% bezogen auf die Summe der Gewichte der Komponenten A), B), C) und D), eines oder mehrerer Photoinitiatoren sowie Pigmente und/oder Füllstoffe, sowie gegebenenfalls lackübliche Hilfs- und Zusatzstoffe und gegebenenfalls ein oder mehrere organische Lösemittel und/oder Wasser.

2. Überzugsmittel nach Anspruch 1, enthaltend eine Vernetzerkomponente A) mit im Mittel mindestens zwei CH-aciden Wasserstoffatomen, die aus einer oder mehreren der folgenden Gruppierungen stammen, die gleich oder verschieden sein können: 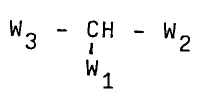 worin 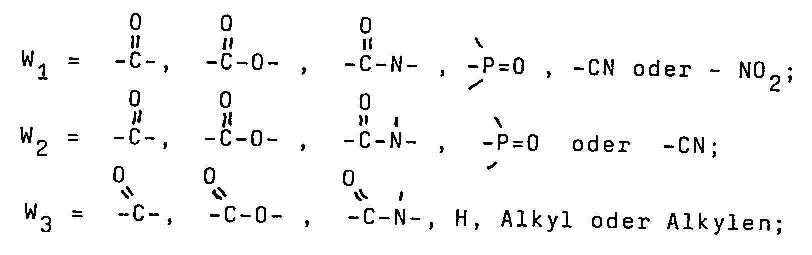 wobei die Reste 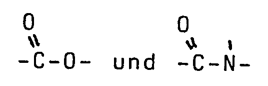 jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist.

3. Überzugsmittel nach Anspruch 1 oder 2, dadurch gekennzeichnet, daß es in lösemittelfreier Form vorliegt.

4. Überzugsmittel nach Anspruch 1 oder 2, dadurch gekennzeichnet, daß es in lösemittelhaltiger Form vorliegt.

5. Überzugsmittel nach Anspruch 1 oder 2, dadurch gekennzeichnet, daß es in Form einer wäßrigen Lösung vorliegt.

6. Überzugsmittel nach einem der Ansprüche 1 bis 5, dadurch gekennzeichnet, daß es einen oder mehrere Sensibilisatoren enthält.

7. Überzugsmittel nach einem der Ansprüche 1 bis 6 in Form einer Pigmente und/oder Füllstoffe enthaltenden Füller- oder Spachtelmasse.

8. Verfahren zur Herstellung eines Überzugs, dadurch gekennzeichnet, daß man auf ein zu beschichtendes Substrat ein Überzugsmittel nach einem der Ansprüche 1 bis 7 aufbringt, die Oberfläche des erhaltenen Films durch energiereiche Strahlung, insbesondere UV-Strahlung härtet und die tieferen Schichten anschließend bei Raumtemperatur oder durch Erwärmen durchhärten läßt.

9. Verwendung der Überzugsmittel nach einem der Ansprüche 1 bis 7 zur Herstellung von Überzügen mit rasch aushärtender Oberfläche.

10. Verwendung der Überzugsmittel nach einem der Ansprüche 1 bis 7als Füller- oder Spachtelmasse.

11. Verwendung der Überzugsmittel nach einem der Ansprüche 1 bis 7 zur Herstellung von Füllerschichten in Mehrschichtlackierungen.

12. Verwendung der Überzugsmittelzusammensetzung nach einem der Ansprüche 1 bis 7 zur Herstellung von Füllerschichten oder als Spachtelmassen bei der Lackierung von Kraftfahrzeugen oder Kraftfahrtzeugteilen.

## Claims

1. Coating compound, containing
A) 10 - 80 wt % of one or more compounds with on average at least two CH-acidic hydrogen atoms,
B) 10 - 80 wt % of one or more α,β-unsaturated compounds with at least two identical or different groups with the general formula
R₁R₂C=CR₃-CO-
which are connected to one another by the residue of a di- or polyvalent alcohol, of a di- or polyamine or of amino alcohol, wherein R₁, R₂ and R₃ are independently of one another a hydrogen atom or a straight or branched alkyl residue with 1 to 10 carbon atoms, which can exhibit one or more olefinic unsaturations and/or one or more hydroxyl groups,
C) 0 - 50 wt % of one or more radically or ionically polymerisable compounds,
D) 5 - 50 wt % of one or more polyamines with at least two amine functions, referred to the sum of the weights of A), B) and C), which can be primary and/or secondary and which can be wholly or partly masked, in the molecule,
E) 0.01 - 5 wt %, referred to the sum of the weights of components A), B), C) and D), of a catalyst in the form of one or more Lewis or Brönstedt bases, wherein the conjugated acids of the latter have a pKa value of at least 10,
F) 0.1 to 10 wt % referred to the sum of the weights of components A), B), C) and D) of one or more photoinitiators, as well as pigments and/or fillers, as well as optionally conventional lacquer auxiliaries and additives and optionally one or more organic solvents and/or water.

2. Coating compound according to claim 1, containing a crosslinker compound A) with on average at least two CH-acidic hydrogen atoms which stem from one or more of the following groupings, which can be identical or different: 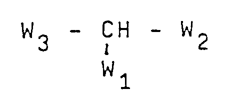 where 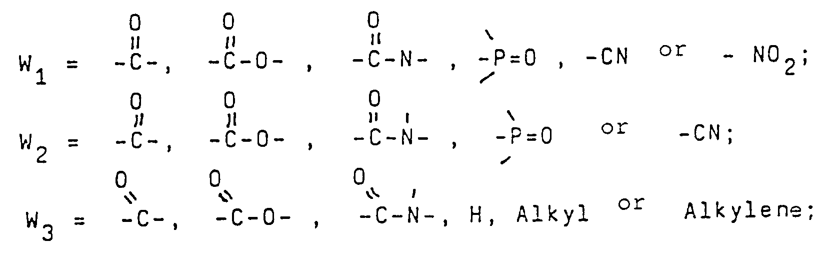 wherein the residues 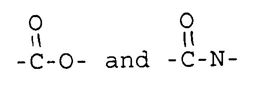 are in each case bonded to the CH group by the carbon atom and the CH group is bonded to a polymeric or oligomeric unit by at least one of the residues W₁, W₂ and/or W₃.

3. Coating compound according to claim 1 or 2, characterised in that it is present in solvent-free form.

4. Coating compound according to claim 1 or 2, characterised in that it is present in solvent-containing form.

5. Coating compound according to claim 1 or 2, characterised in that it is present in the form of an aqueous solution.

6. Coating compound according to one of claims 1 to 5, characterised in that it contains one or more sensitizers.

7. Coating compound according to one of claims 1 to 6 in the form of a filler or surfacer compound containing pigments and/or fillers.

8. Method for manufacturing a coating, characterised in that there is applied to a substrate to be coated a coating compound according to one of claims 1 to 7, the surface of the film obtained is cured by energy-rich radiation, in particular UV radiation, and the deeper layers are then fully cured at room temperature or by heating.

9. Use of the coating compounds according to one of claims 1 to 7 for manufacturing coatings with rapidly curing surface.

10. Use of the coating compounds according to one of claims 1 to 7 as a filler or surfacer.

11. Use of the coating compounds according to one of claims 1 to 7 for manufacturing filler layers in multi-layer lacquerings.

12. Use of the coating compound composition according to one of claims 1 to 7 for manufacturing filler layers or as surfacers during the lacquering of motor vehicles or motor vehicle parts.

## Revendications

1. Produit de revêtement contenant
A) 10 à 80 % en poids d'un ou plusieurs composés contenant en moyenne au moins deux atomes d'hydrogène de CH acides,
B) 10 à 80 % en poids d'un ou plusieurs composés α,β-insaturés contenant au moins deux groupes identiques ou différents de formule générale
R₁R₂C=CR₃-CO-
reliés entre eux par le radical d'un alcool di- ou poly-valent, d'une di- ou poly-amine ou d'un aminoalcool, R_{1,} R₂ et R₃ représentant chacun, indépendamment les uns des autres, un atome d'hydrogène ou un groupe alkyle à chaîne droite ou ramifiée en C₁-C₁₀, qui peut contenir une ou plusieurs insaturations oléfiniques et/ou un ou plusieurs groupes hydroxy,
C) 0 à 50 % en poids d'un ou plusieurs composés aptes à la polymérisation radicalaire ou ionique,
D) 5 à 50 % en poids par rapport à la somme des poids de A), B) d'une ou plusieurs polyamines à au moins deux fonctions amino, et qui peuvent être primaires et/ou secondaires et bloquées en totalité ou en partie, dans la molécule,
E) 0,01 à 5 % en poids, par rapport à la somme des poids des composants A), B), C) et D) d'un catalyseur sous la forme d'une ou plusieurs bases de Lewis ou de Brönstedt dont les acides conjugués ont une valeur de pKa d'au moins 10,
F) 0,1 à 10 % en poids, par rapport à la somme des poids des composants A), B), C) et D) d'un ou plusieurs photo-inducteurs, ainsi que des pigments et/ou matières de charge et le cas échéant des produits auxiliaires et additifs usuels dans l'industrie des peintures et vernis et le cas échéant un ou plusieurs solvants organiques et/ou de l'eau.

2. Produit de revêtement selon la revendication 1, contenant un composant réticulant A) ayant en moyenne au moins deux atomes d'hydrogène de CH acides, provenant d'un ou plusieurs des groupements suivants qui peuvent être identiques ou différents : 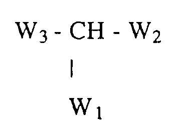 avec 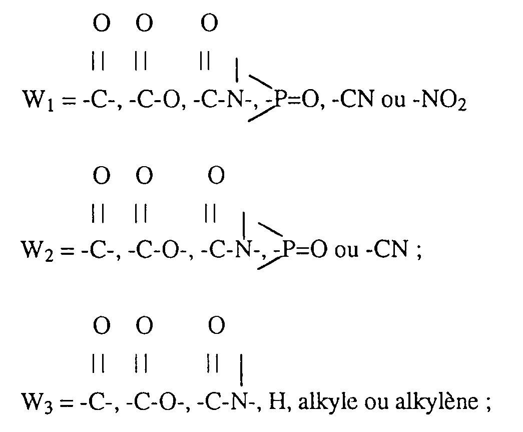 les groupes 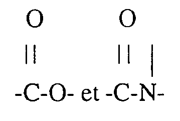 étant reliés chacun au groupe CH par l'intermédiaire de l'atome de carbone et le groupe CH étant relié à un motif polymère ou oligomère par l'intermédiaire d'au moins un des groupes W₁, W₂ et/ou W₃.

3. Produit de revêtement selon la revendication 1 ou 2, caractérisé en ce qu'il est exempt de solvant.

4. Produit de revêtement selon la revendication 1 ou 2, caractérisé en ce qu'il contient des solvants.

5. Produit de revêtement selon la revendication 1 ou 2, caractérisé en ce qu'il est à l'état de solution aqueuse.

6. Produit de revêtement selon l'une des revendications 1 à 5, caractérisé en ce qu'il contient un ou plusieurs sensibilisateurs.

7. Produit de revêtement selon l'une des revendications 1 à 6, sous la forme d'un mastic ou d'une masse à appliquer à la spatule contenant des pigments et/ou des matières de charge.

8. Procédé pour l'application d'un revêtement, caractérisé en ce que l'on applique sur un support à revêtir un produit de revêtement selon l'une des revendications 1 à 7, on durcit ensuite la surface de la pellicule sous l'action de rayonnements à haute énergie, en particulier de rayonnements UV, et on laisse durcir complètement les couches profondes à température ambiante ou on les fait durcir par chauffage.

9. Utilisation des produits de revêtement selon l'une des revendications 1 à 7 pour la fabrication de revêtements à surfaces durcissant rapidement.

10. Utilisation des produits de revêtement selon l'une des revendications 1 à 7 en tant que mastics ou masses à appliquer à la spatule.

11. Utilisation des produits de revêtement selon une des revendications 1 à 7 pour la fabrication de couches de mastic, lors d'applications de plusieurs couches de peinture ou de vernis.

12. Utilisation du produit de revêtement selon l'une des revendications 1 à 7 pour la fabrication de couches de mastic ou en tant que masses à appliquer à la spatule, lors de l'application de vernis ou de peinture à des véhicules ou des pièces de véhicules.
